# EUROPEAN PATENT APPLICATION

(11) **EP 0 840 207 A1**
(43) Date of publication of application: **06.05.1998**
(21) Application number: 97118948.5
(22) Date of filing: 30.10.1997
(51) Int. Cl.: G06F 7/52

(54) **A microprocessor and method of operation thereof**

(30) Priority: 30.10.1996 US 29680 P
(71) Applicant: TEXAS INSTRUMENTS INCORPORATED, Dallas Texas 75265 (US)
(72) Inventor: Wichman, Shannon A., Dallas, TX 75287 (US); Dao, Tuan Q., Dallas, TX 75081 (US)
(74) Representative: Schwepfinger, Karl-Heinz, Dipl.-Ing.

(57) **Abstract**

A microprocessor and system incorporating the same, which includes a floating-point unit (FPU) having a multiplier (86) capable of signed and unsigned multiplication, is disclosed. The multiplier (86) includes a select circuit (64) that generates a signal upon a sign bit signal line (SGN) that is copied into the most significant bit of the multiplicand. The select circuit (64) receives a control signal (SIGNX) indicating whether signed or unsigned multiplication is to be performed. In signed multiplication, the select circuit (64) applies the most significant bit of the multiplicand (S/MSB) to the sign bit signal line (SGN); in unsigned multiplication, the select circuit (64) applies a low logic level to the sign bit signal line (SGN); the multiplicand is shifted right by one bit position, and the state of the sign bit signal line (SGN) is stored as a new most significant bit. A Booth encoder (68) performs three-bit Booth encoding upon the multiplier, and generates zero (Z), negative (N), and magnitude (X) control signals therefrom. The zero (Z) and negative (N) signals are applied to prefix logic (70), along with the sign bit signal line (SGN), which generates sign extension prefixes (PFX) that are appended to partial products (PP) generated by partial product generators (66) according to the Booth encoder (68) output. The partial products (PP) and prefixes (PFX) are summed by a multiplier array (68) into the product. The same multiplier (86) is thus capable of multiplying operands in multiple formats, using sign extension.

## Description

### BACKGROUND OF THE INVENTION

This invention is in the field of integrated circuits, and is more specifically directed to arithmetic circuitry in microprocessor integrated circuits.

As is fundamental in the art, arithmetic calculation is an important function performed by modern microprocessors. Modern microprocessors now commonly include not only integer arithmetic capability, but also on-chip floating-point units for rapidly performing arithmetic operations upon numbers expressed in floating-point format (i.e., operands having mantissa and exponent portions, plus a sign bit). Floating-point arithmetic capability is of course useful in the execution of computation-intensive programs, as are often encountered in complex problems such as signal processing.

Conventional microprocessors rely quite heavily upon multiplication operations, and thus multiplier circuitry, in performing a wide range of arithmetic operations. According to conventional approaches, high performance multiplier circuitry may be readily implemented with available circuit technology. As a result, it is well known to perform operations such as division, square root, and discrete Fourier transforms through the use of approximation algorithms involving repeated multiplications, to take advantage of the ability of modern microprocessors to rapidly perform multiply-and-add operations. Array multipliers are a well-known class of multiplier used in conventional microprocessor circuits. In general, array multipliers operate by adding a sequence of partial products, where the partial products are shifted copies of the multiplicand selected according to the value of each multiplier bit. The partial products are added together into a final sum to arrive at the product of the multiplicand with the multiplier. A separate partial product generator may be used in combination with an adder array, or alternatively each cell in the adder array may receive specific multiplier and multiplicand bits. Many array multipliers include Booth encoding, which is a well-known technique for reducing the number of partial products to be summed. Booth encoding interrogates neighboring bits in the multiplier to select the multiple of the multiplicand to be applied as a partial product. For example, 2-bit Booth encoding selects, as the partial product, either 0 or ±1X the multiplicand; 3-bit Booth encoding generates a partial product from ±0×, ±1X, of ±2X the multiplicand.

Signed operands present additional complexity to the multiplication process. As is fundamental in the art, signed binary numbers are typically represented by a leading sign bit. Signed operands are handled by array multipliers in several ways. The simplest technique is to merely extend the partial product by the sign bit over the full width of the adder, so that the sign information propagates along the full length of the adder. This simple approach requires each of the lower order partial product adders to extend over the full width of the result (e.g., up to twice the number of bits of each partial product), which of course consumes a great deal of chip area for implementation. This difficulty is overcome by only extending the sign bit, in each partial product, for enough bits to propagate carries from one adder stage to the next, thereby reducing the necessary bit width of the adder stages. Sign extension is described in Baugh, et al., "A Two's Complement Parallel Array Multiplication Algorithm", Trans Computer (IEEE, Dec. 1973), pp. 143-145.

The generation of sign extension bits depends, however, upon the type of operands being multiplied. For example, multiplication of floating-point operands according to the IEEE 754 floating-point standard is typically handled separately, outside of the array multiplier; in addition, unsigned integer multiplication also does not require handling of the operand signs. However, since Booth encoding may involve negative partial products, sign extension is still required in array multipliers operating upon floating-point or unsigned integer operands. The multiplication of signed integers, especially in a Booth encoder multiplier, makes sign extension even more complex, as the sign extension is different for signed integers (i.e., negative integers) than for Booth encoded floating-point operands and positive (or unsigned integers).

In many conventional architectures, the array multiplier is implemented according to a single operand type. This requires reformatting of operands in other formats, prior to multiplication. The additional circuitry and time required for such reformatting adds to the time required for multiplication, and is especially disadvantageous when executing operations such as discrete Fourier transforms in which multiplications are performed iteratively.

It is, of course, also undesirable to provide separate multiplier circuitry for different operand types, in order to avoid the performance penalty due to operand conversion. As a result, it is desirable to provide a single multiplier array in which unsigned and signed integers, and floating-point operands, may be efficiently multiplied.

By way of further background, U.S. Patent No. 5,195,051 describes a 4-bit Booth encoded array multiplier that multiplies floating-point, unsigned integer, and signed integer operands. According to this reference, a partial product sign bit is generated by the most significant multiplier bit of the 4 bit Booth encoding group for that partial product, in the floating-point and unsigned integer case, and by the exclusive-OR of this most significant multiplier bit and the most significant multiplicand bit in the signed integer case.

### BRIEF SUMMARY OF THE INVENTION

It is an object of the present invention to provide a microprocessor with multiplier circuitry capable of multiplying operands of various types, including floating-point operands, unsigned integers, and signed integers.
It is a further object of the present invention to provide such a microprocessor in which such multiplication is efficiently performed without requiring operand conversion.
It is a further object of the present invention to provide such a microprocessor in which sign extension is used in multiplication of each operand type, to minimize the width of adder circuitry in the multiplier array.

It is a further object of the present invention to provide such multiplication capability in a Booth encoded array multiplier.

It is a further object of the present invention to provide such multiplication capability in a floating-point unit of a microprocessor.

Other objects and advantages of the present invention will be apparent to those of ordinary skill in the art having reference to the following specification together with its drawings.

The present invention may be implemented into multiplication circuitry of a microprocessor. The logical combination of a control signal indicating signed integer multiplication, with a most significant operand bit, is used to generate a new most significant bit for the multiplicand. These signals, in combination with the result of Booth encoding of the multiplier, are used to generate a prefix to each partial product, prior to addition into the product. The prefix differs for signed integer multiplication from other multiplication operations, allowing for the same array multiplier to be used for multiplication of operands of differing types.

### BRIEF DESCRIPTION OF THE DRAWINGS

The present invention will now be further described by way of example, with reference to the accompanying drawings in which:
Figure 1 is an electrical diagram, in block form, of a microprocessor and system constructed according to the preferred embodiment of the invention.
Figure 2 is an electrical diagram, in block form, of a floating-point unit in the microprocessor of Figure 1.
Figure 3 is an electrical diagram, in block form, of the execution stages in the floating-point unit of Figure 2 according to the preferred embodiment of the invention.
Figure 4 is an electrical diagram, in block form, of the multiplier in the floating-point unit of Figure 2 according to the preferred embodiment of the invention.
Figure 5a is an electrical diagram, in block form, of the partial product generators and partial product registers in the multiplier of Figure 4 according to the preferred embodiment of the invention.
Figure 5b is an electrical diagram, in schematic form, of a logic cell in the partial product generator of Figure 5a according to the preferred embodiment of the invention.
Figure 6 is an electrical diagram, in block form, of the multiplier array in the floating-point unit of Figure 2 according to the preferred embodiment of the invention.
Figure 7 is an electrical diagram, in block form, of a carry-save adder in the first carry-save level of the multiplier array of Figure 6 according to the preferred embodiment of the invention.

### DETAILED DESCRIPTION OF THE EMBODIMENTS OF THE INVENTION

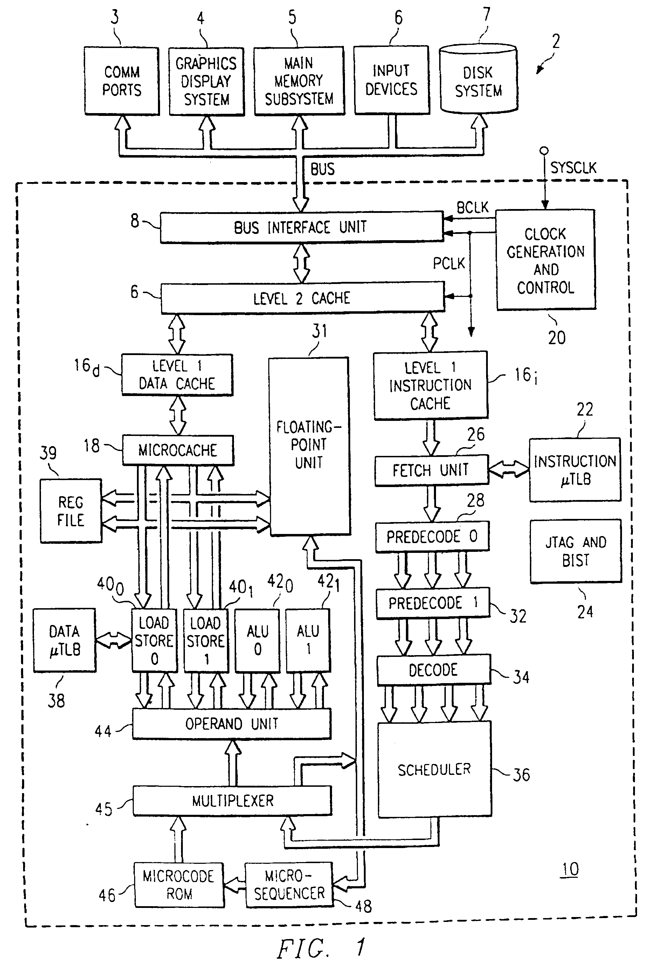

Referring now to Figure 1, an exemplary data processing system 300, including an exemplary superscalar pipelined microprocessor 10 within which the preferred embodiment of the invention is implemented, will be described. It is to be understood that the architecture of system 300 and of microprocessor 10 is described herein by way of example only, as it is contemplated that the present invention may be utilized in microprocessors of various architectures. It is therefore contemplated that one of ordinary skill in the art, having reference to this specification, will be readily able to implement the present invention in such other microprocessor architectures. It is further contemplated that the present invention may be realized in single-chip microprocessors and microcomputers or in multiple-chip implementations, with the manufacture of such integrated circuits accomplished according to silicon substrate, silicon-on-insulator, gallium arsenide, and other manufacturing technologies, and using MOS, CMOS, bipolar, BiCMOS, or other device implementations.

Microprocessor 10, as shown in Figure 1, is connected to other system devices by way of external bus BUS. While external bus BUS, in this example, is shown as a single bus, it is of course contemplated that external bus BUS may represent multiple buses having different speeds and protocols, as is known in conventional computers utilizing the PCI local bus architecture. System 300 contains such conventional subsystems as communication ports 303 (including modem ports and modems, network interfaces, and the like), graphics display system 304 (including video memory, video processors, a graphics monitor), main memory system 305 which is typically implemented by way of dynamic random access memory (DRAM) and which may include memory stack 307, input devices 306 (including keyboard, a pointing device, and the interface circuitry therefor), and disk system 308 (which may include hard disk drives, floppy disk drives, and CD-ROM drives). It is therefore contemplated that system 300 of Figure 1 corresponds to a conventional desktop computer or workstation, as are now common in the art. Of course, other system implementations of microprocessor 10 can also benefit from the present invention, as will be recognized by those of ordinary skill in the art.

Microprocessor 10 includes bus interface unit (BIU) 8 connected to external bus BUS, which controls and effects communication between microprocessor 10 and the other elements in a system 300. BIU 8 includes the appropriate control and clock circuitry to perform this function, including write buffers for increasing the speed of operation, and including timing circuitry so as to synchronize the results of internal microprocessor operation with bus BUS timing constraints. Microprocessor 10 also includes clock generation and control circuitry 20 which generates clock phases based upon system clock SYSCLK; in this example, clock generation and control circuitry 20 generates bus clock BCLK and core clock PCLK from system clock SYSCLK.

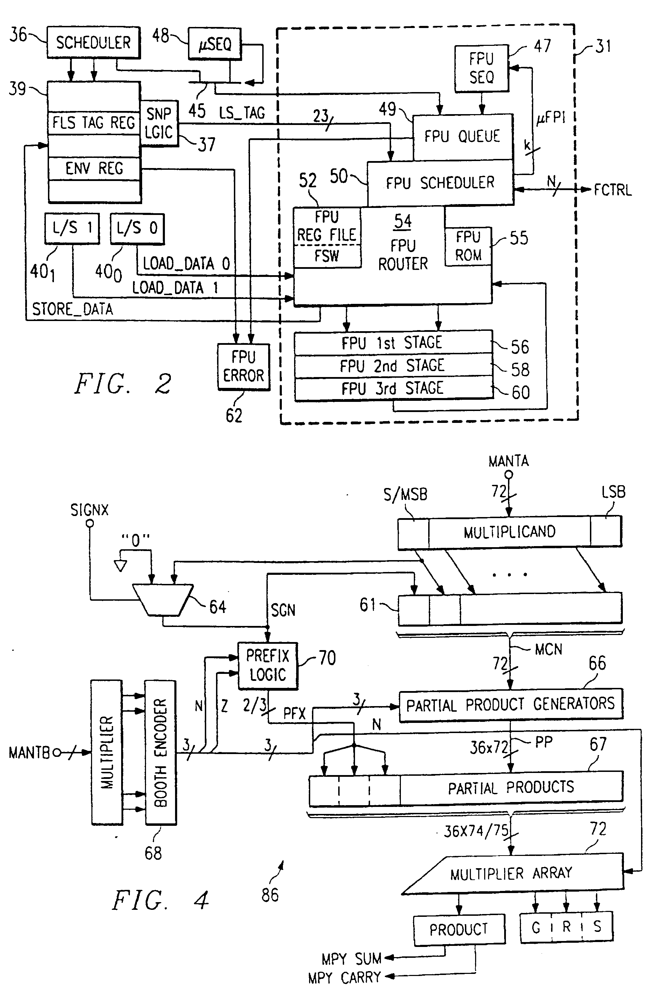

As is evident in Figure 1, microprocessor 10 has three levels of internal cache memory, with the highest of these as level 2 cache 6, which is connected to BIU 8 by way of an internal bus. In this example, level 2 cache 6 is a unified cache, and is configured to receive all cacheable data and cacheable instructions from bus BUS via BIU 8, such that much of the bus traffic presented by microprocessor 10 is accomplished via level 2 cache 6. Of course, microprocessor 10 may also effect bus traffic around cache 6, by treating certain bus reads and writes as "not cacheable". Level 2 cache 6, as shown in Figure 2, is connected to two level 1 caches 16; level 1 data cache 16_{d} is dedicated to data, while level 1 instruction cache 16ᵢ is dedicated to instructions. Microcache 18 is a fully dualported level 0 data cache, in this example.

As shown in Figure 1, microprocessor 10 is of the superscalar type, and thus includes multiple execution units. These execution units include two ALUs 42₀, 42₁ for processing conditional branch, integer, and logical operations, floating-point unit (FPU) 31, two load-store units 40₀, 40₁, and microsequencer 48. The two load-store units 40 utilize the two ports to microcache 18, for true parallel access thereto, and also perform load and store operations to registers in register file 39. Data microtranslation lookaside buffer (µTLB) 38 is provided to translate logical data addresses into physical addresses, in the conventional manner.

These multiple execution units are controlled by way of multiple pipelines of seven stages each, with write-back. The pipeline stages are as follows:
- F: Fetch: This stage generates the instruction address and reads the instruction from the instruction cache or memory
- PD0: Predecode stage 0: This stage determines the length and starting position of up to three fetched x86-type instructions
- PD1: Predecode stage 1: This stage extracts the x86 instruction bytes and recodes them into fixed length format for decode
- DC: Decode: This stage translates the x86 instructions into atomic operations (AOps)
- SC: Schedule: This stage assigns up to four AOps to the appropriate execution units (including FPU 31)
- OP: Operand: This stage retrieves the register operands indicated by the AOps
- EX: Execute: This stage runs the execution units according to the AOps and the retrieved operands
- WB: Write-back: This stage stores the results of the execution in registers or in memory

This pipeline, referred to hereinbelow as the "integer pipeline", operates in combination with the floating-point pipeline of FPU 31 according to the preferred embodiment of the present invention.

Referring back to Figure 1, the pipeline stages noted above are performed by various functional blocks within microprocessor 10. Fetch unit 26 generates instruction addresses from the instruction pointer by way of instruction micro-translation lookaside buffer (µTLB) 22, for application to level 1 instruction cache 16ᵢ. Instruction cache 16ᵢ produces a stream of instruction data to fetch unit 26, which in turn provides the instruction code to predecode 0 stage 28 and predecode 1 stage 32 in the desired sequence. These two stages operate as separate pipeline stages, and together operate to locate up to three x86 instructions and apply the same to decoder 34. Predecode 0 stage 28 determines the size and position of as many as three variable-length x86 instructions, while predecode 1 stage 32 recodes the multi-byte instructions into a fixed-length format to facilitate decoding. Decode unit 34, in this example, contains four instruction decoders, each capable of receiving a fixed length x86 instruction from predecode 1 stage 32 and producing from one to three atomic operations (AOps), which are substantially equivalent to RISC instructions. Scheduler 36 reads up to four AOps from the decode queue at the output of decode unit 34, and assigns these AOps to the appropriate execution units. Operand unit 44 receives an input from scheduler 36 and also from microcode ROM 46, via multiplexer 45, and fetches register operands for use in the execution of the instructions. In addition, according to this example, operand unit 44 also performs operand forwarding to send results to registers that are ready to be stored, and also performs address generation for AOps of the load and store type.

Microsequencer 48 and microcode ROM 46 control ALUs 42 and load/store units 40 in the execution of microcode entry AOps, which are generally the last AOps to execute in a cycle. In this example, microsequencer 48 sequences through microinstructions stored in microcode ROM 46, to effect control responsive to microcoded microinstructions such as complex or rarely-used x86 instructions, x86 instructions that modify segment or control registers, handling of exceptions and interrupts, and multi-cycle instructions (such as REP instructions, and instructions that PUSH and POP all registers). Microprocessor 10 also includes circuitry 24 for controlling the operation of JTAG scan testing, and of certain built-in self-test (BIST) functions, ensuring the validity of the operation of microprocessor 10 upon completion of manufacturing, and upon resets and other events.

Referring now to Figure 2, the construction of FPU 31 according to this embodiment of the invention, and its interconnection with the other functional blocks of microprocessor 10, will now be described in detail. This construction of FPU 31 is presented by way of example only, as it is to be understood that the present invention will be beneficial in the implementation of floating-point units constructed according to other architectures and designs.

FPU 31 includes FPU queue stage 49, which is effectively an instruction buffer, between the integer portions of microprocessor 10 and the execution stages of FPU 31. FPU queue stage 49 receives FPU instructions from scheduler 36 or from integer microsequencer 48 (in the case of microcoded instructions), via multiplexer 45 that is under the control of microsequencer 48. FPU queue stage 49 also receives FPU instructions from FPU microsequencer 47, for the execution of microcoded FPU instructions.

FPU queue stage 49 is connected to FPU scheduler 50 which, in this example, performs the scheduling function for floating-point instructions separately from scheduler 36 in the integer portion of microprocessor 10. FPU scheduler 50 is logic that operates in similar fashion as scheduler 36, responsive to instructions forwarded thereto from FPU queue stage 47, and also responsive to address information conveyed thereto from register file 39. Register file 39 includes at least one register FLS TAG, which stores the format of data operands that are to be used by FPU 31. Snoop logic 37 is associated with register file 39 to monitor the pipeline for load/store operations corresponding to floating-point instructions, for example as may be stored in register FLS TAG. Snoop logic 37 encodes certain information corresponding to floating-point load/store directives, and forwards this information to FPU scheduler 50 on bus LS_TAG. In response to the floating-point AOps and to the load/store directives, FPU scheduler 50 issues control signals within FPU 31 to execute the instructions communicated thereto. In this example, FPU 31 includes its own register file 52. Registers included within FPU register file 52 include a floating-point status word (FSW), a floating-point control word (FCW), and an eight-register data stack (consistent with the x86 instruction set). The five floating-point environment registers, useful for interrupt handling, are included in register file 39 (shown in Figure 2 as ENV REG), as these registers are not used internally by FPU 31.

FPU router 54 operates in conjunction with FPU scheduler 50 to forward the desired operands to the execution stages of FPU 31. FPU router 54 receives floating point operands from multiple sources. Operands retrieved from memory are forwarded to FPU router 54 from load/store units 40₀, 40₁ (presenting data on buses LOAD_DATA0, LOAD_DATA1, respectively). FPU router 54 also receives floating-point operands from FPU register file 52, constant data ROM 55, and FPU 3rd execution stage 60 (which presents writeback data from the results of prior instructions). Constant data ROM 55 stores common floating-point constants (e.g., π, e, √2) that may be used in floating-point instruction execution, particularly in transcendental function evaluation and iterative convergence division.

According to this preferred embodiment of the invention, FPU scheduler 50 receives instruction control signals and directives from three sources, namely directives from load/store units 40 on lines LS_TAG, decoded control signals and opcodes from FPU queue stage 49, and address information from writeback bus WB generated by FPU 3^{rd} execution stage 60 in response to a single-pass instruction previously launched and executed. Based upon these inputs, FPU scheduler 50 checks for dependencies, or pipeline conflicts, among the resources to which the instructions, control signals and directives point. The source and destination resources to which the floating-point AOps already in the pipeline are recorded and analyzed by FPU scheduler 50 relative to each new instruction or directives in performing this function. FPU scheduler 50 also updates and maintains the machine status, for example by way of a floating-point status word FSW and a floating-point control word FCW. Status information, including identification of denormalized operands and other exceptions are communicated from the floating-point status word FSW for each floating-point result for storage in FPU error registers 62, via environment registers ENV REG in register file 39 and FPU queue stage 49.

Based on this information, scheduling logic in FPU scheduler 50 determines the operations to be launched for execution in the next cycle. In the event that no dependencies are detected and that the currently scheduled instruction includes a read or write to a register in the stack, FPU scheduler 50 issues commands to FPU register file 52 to validate previously issued enable signals according to the instruction being scheduled, and generates signals to FPU router 54 to select the appropriate operands for forwarding to FPU 1^{st} execution stage 56 according to the instruction being launched. Single-pass instructions are initiated by FPU scheduler 50 by control signals to FPU 1^{st} execution stage 56.

Depending upon the instruction, FPU scheduler 50 may also initiate a floating-point microcoded sequence by issuing the responsible floating point instruction and a corresponding microcode entry address (on lines µFPI) to FPU microsequencer 47, which will in turn initiate the microcode routine from the entry address to generate the next sequence of instructions for execution. FPU microsequencer 47 issues and controls floating-point instructions that require multiple passes through FPU execution stages 56, 58, 60. FPU microsequencer 47, as conventional in the art, includes a microcode ROM that stores executable instruction codes called by microcode entry addresses generated by scheduler 50. The architecture of FPU microsequencer 47 is of the branch-always type, where the next microinstruction address is determined from one of four branch options in the current microinstruction. Upon entry into a microcode sequence, FPU microsequencer 47 presents the sequence of executable instruction codes to FPU queue stage 49, for scheduling by FPU scheduler 50.

In normal operation, where no conflicts or dependencies are detected, a new floating-point instruction will advance through FPU scheduler 50 on every cycle. In the event that a dependency is detected, FPU scheduler 50 will stall the pipeline. The instruction being scheduled at the time of a stall will not proceed, and will be held up until the dependency or exception clears. In the event of a conflict that causes the execution of an earlier instruction to not complete in normal fashion (e.g., prior to execution of an instruction upon a denormal operand, or execution resulting in not-a-number NaN), FPU scheduler 50 will issue an abort sequence, in which case the instructions currently in the floating-point pipeline will be flushed, and the floating-point sequence will be restarted.

FPU scheduler 50 also handles instruction completion, including writeback and update of machine status. In the event of any exceptions resulting from the execution of a floating-point operation, such as NaN (not a number), overflow, underflow, and the like, scheduler 50 is also responsible for handling the exceptions and reporting the exceptions to the integer pipeline by way of floating-point status word FSW, as noted above. Scheduler 50 and router 54 also provide an interface with the integer logic, as is necessitated by the distribution of the scheduling function to FPU 31.

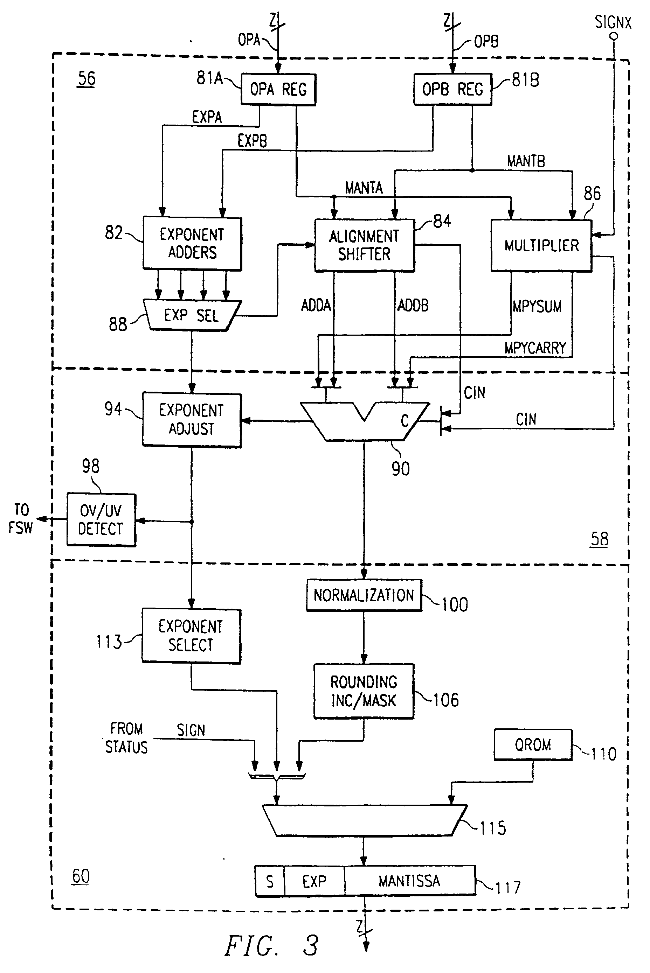

Referring now to Figure 3, the datapaths of FPU 1st, 2nd, and 3rd execution stages 56, 58, 60 will now be described. As noted above, each of execution stages 56, 58, 60 also include control and status pipelines, along which control signals and status information travel in conjunction with the operands in the corresponding datapath.

Figure 3 illustrates the construction of the datapath portion of FPU 1st execution stage 56 according to this preferred embodiment of the invention. Operands OPA and OPB are received from router 54 and stored in registers 81A, 81B, respectively. In this embodiment of the invention, FPU 1st execution stage 56 includes three datapaths; one datapath handles the exponents of floating-point operands OPA and OPB, a second datapath aligns the mantissas of operands OPA and OPB for add and subtract instructions, and a third datapath multiplies operands OPA and OPB for multiply and divide instructions. As such, exponent adders 82 in FPU 1st execution stage 56 receive exponent portions EXPA, EXPB of operands OPA, OPB, respectively, and generate the four results EXPA + EXPB - bias, used in multiplication; EXPA- EXPB + bias, used in division; and the results EXPB - EXPA and EXPA - EXPB used in floating-point adds and subtracts. Exponent selector 88 selects from among the four exponent adder results, under the control of a control signal from FPU scheduler 50, as generated for the current instruction. The output of exponent selector 88 produces an exponent value that is forwarded to FPU 2nd execution stage 58; these, and the others of, outputs from FPU 1st execution stage 56 are typically registered outputs for purposes of stability (the registers not shown in Figure 3 for clarity).

The addition datapath in FPU 1st execution stage 56 includes a conventional alignment shifter 84 that shifts the mantissas of the operands (applied thereto on lines MANTA and MANTB), as required by additive instructions such as floating-point adds and subtracts and by a shift count indicated by exponent selector 88, based upon the greater of the results EXPA - EXPB or EXPB - EXPA. The outputs of alignment shifter 84 on lines ADDA, ADDB, CIN (carry in), and a sticky bit (not shown) are applied to FPU 2nd execution stage 58. As is conventional in the art, the sticky bit is the logical OR of the bits shifted out of the end of alignment shifter 84, and is used in rounding. Other conventional floating-point add hardware, such as a mantissa comparator to compute the sign of the result in effective subtraction events or to determine the larger of two NaN operands, and the like, may also be provided in combination with alignment shifter 84.

The multiplication datapath in FPU 1st execution stage 56 includes multiplier 86, which receives mantissas on lines MANTA, MANTB from operand registers 81A, 81B, respectively, and which provides outputs on lines MPYSUM, MPYCARRY, CIN, along with guard, round, and sticky bits, to FPU 2nd execution stage 58. Multiplier 86 also receives a control signal from FPU scheduler 50 on line SIGNX, which indicates whether a signed integer multiplication is to be performed, and according to which multiplier 86 generates the appropriate sign extension prefixes as will be described in further detail hereinbelow. In general, multiplier 86 according to this embodiment of the invention is constructed according to a 72-bit by 72-bit carry-save architecture, using three-bit Booth encoding to reduce the number of partial products to thirty-six. It is of course contemplated that Booth encoding using different bit widths in each group (i.e., two bits or four bits, rather than three bits) may alternatively be implemented by one of ordinary skill in the art having reference to this specification, such alternative Booth encoding also being within the scope of the present invention. In this embodiment of the invention, the multiplicand is associated with the binary value on lines MANTA, while the multiplier is associated with the binary value on lines MANTB.

According to this exemplary implementation, each of the mantissa operands applied to multiplier 86 are 72 bits in width, even though the highest precision IEEE 754 standard format requires a sixty-four bit mantissa. Some of these additional bits are necessary to achieve a sufficiently accurate result for operations such as division and calculation of transcendental functions (e.g., trigonometric and hyperbolic function evaluation), considering that the digital multiplication performed by multiplier 86 is of finite precision. The remaining bits of the 72-bit width are provided, in this example, as a result of the organization of the adder stages as described hereinbelow, and in effect are "free" bits of precision considering that the number of adder stages would not be reduced if the extra bits were not provided.

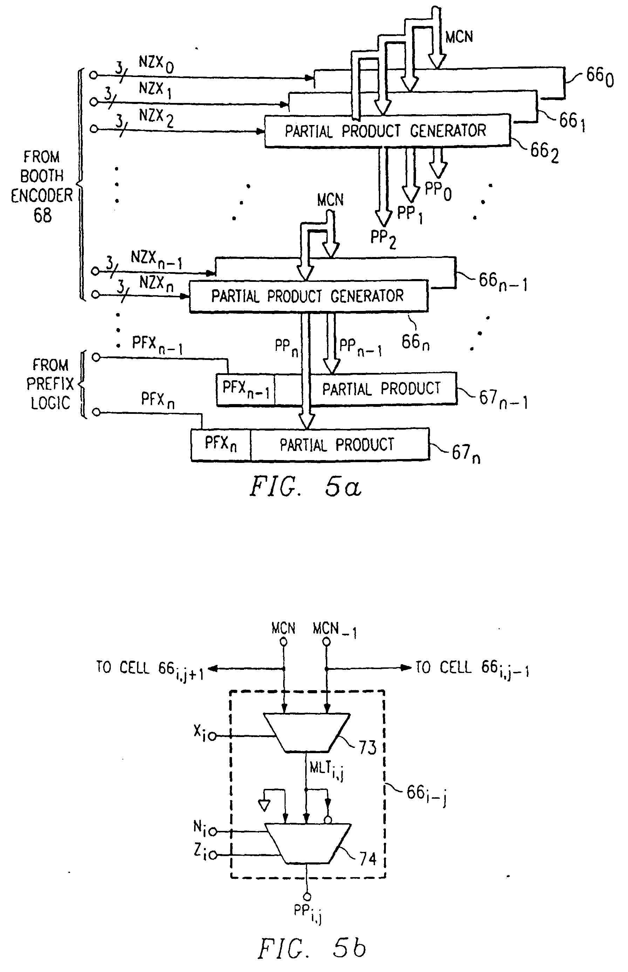

Referring now to Figure 4, the construction of multiplier 86 according to this embodiment of the invention, will now be described. As noted above, multiplier 86 is capable of multiplying operands in various formats, including unsigned integer, floating-point, and signed integer. In the case of unsigned integer and floating-point multiplication, multiplier 86 operates upon unsigned operands (the sign bit for floating-point multiplications being handled separately); signed integer multiplication performed by multiplier 86 requires consideration of the operand sign bit, particularly in the summing of partial products and in sign extension for Booth encoded multiplication, as performed by multiplier 86 according to this embodiment of the invention.

As shown in Figure 4, lines MANTA provide the 72-bit multiplicand for multiplications performed by multiplier 86. The most significant bit of the multiplicand, illustrated in Figure 4 as bit S/MSB, corresponds to the sign bit in the case of signed integer multiplication, but corresponds to the most significant magnitude bit for floating-point and unsigned integer operands. According to this embodiment of the invention, bit S/MSB of MANTA is forwarded to one input of multiplexer 64, the other input of which is tied to ground (i.e., logical 0). The control input of multiplexer 64 receives a control signal on line SIGNX from FPU scheduler 50, which indicates whether the multiplication to be performed is signed integer multiplication. According to this embodiment of the invention, multiplexer 64 applies a "0" to its output, on line SGN, for floating-point and unsigned integer multiplication (line SIGNX inactive), and applies the state of bit S/MSB of MANTA to line SGN for signed integer multiplication (line SIGNX active).

As functionally illustrated in Figure 4, according to the preferred embodiment of the invention, the multiplicand is received by multiplier 86 on lines MANTA and is shifted right by one bit position, as shown by shifted multiplicand state 61. Shifted multiplicand state 61 is merely illustrative of the combination of the multiplicand with other information according to this embodiment of the invention and of the routing of the combination within multiplier 86, as multiplier 86 operates within a single cycle (i.e., state 61 is preferably not a register, which would require a cycle for storage). The shifting of the multiplicand discards the least significant bit of the value on lines MANTA, which effectively divides the multiplicand by two. According to this exemplary embodiment of the invention, the highest precision floating-point output required from 72-bit multiplier 86 is only 64 bits, and integers are represented by the most significant 32 bits of lines MANTA, MANTB (the lower order bits set to 0); as such, the least significant bit of each input operand is expendable in both floating-point and integer multiplication. This same shifting (division by two) is performed upon the multiplier by shifting its contents to the right from lines MANTB, with the most significant bit on lines MANTB replicated into the new most significant bit of the multiplier as applied to Booth encoder 68. The factor of four lost by these shifts will be recovered upon completion of the multiplication. Referring back to Figure 4, the most significant bit of shifted multiplicand state 61 receives line SGN from multiplexer 64, which is a copy of bit S/MSB of MANTA for signed integer multiplication, and which is a "0" state for floating-point and unsigned integer multiplication operations (i.e., the operand is treated as a positive value in these cases). Shifted multiplicand state 61, which is the multiplicand divided by two (i.e., shifted right), with its most significant bit set according to the multiplication mode and sign information on line SGN, is then forwarded to partial product generators 66 on lines MCN.

Lines MANTB forward the value of the multiplier to Booth encoder 68; as noted above, the value on lines MANTB is also divided by two prior to Booth encoding. Booth encoder 68, according to this preferred embodiment of the invention, performs Booth encoding upon successive groups of three bits of the multiplier (i.e., 3-bit Booth encoding). As known in the art, Booth encoding reduces the number of partial products to be added by generating partial products that are positive and negative multiples of the multiplicand, with the specific multiple selected according to the application of Booth's algorithm to multiple adjacent bits in the multiplier. In the 3-bit Booth encoding performed by Booth encoder 68 according to this embodiment of the invention, three adjacent bits of the multiplier are interrogated to select each partial product from among ±0×, ±1×, and ±2× multiples of the multiplicand. As is well-known in the art, Booth encoding reduces the number of partial products to be summed in generating the product; in this example of the multiplication of 72-bit operands, 3-bit Booth encoding reduces the number of possible partial products from 72 (with no Booth encoding) to 36. Booth encoder 68 generates three control lines N, Z, X at its output for each partial product; in this example, control line N indicates (when active) that the partial product is a negative multiple, control line Z indicates (when active) that the partial product is zero, and control line X indicates whether the partial product is a 2× multiple (active) or a 1× multiple (inactive). Each of control lines N, Z, X are forwarded to prefix logic 70 and control line N is forwarded to multiplier array 72, as will be described hereinbelow, and control lines N, Z are also forwarded on lines MCN to partial product generators 66.

Partial product generators 66 may be constructed according to conventional techniques for generating partial products, for the particular Booth encoding technique used. Figure 5a illustrates, by way of example, a functional implementation of partial product generators 66, for the case of three-bit Booth encoding. In this example, partial product generators 66 generate all of the partial products required for multiplication in parallel, and as such is functionally arranged as n+1 partial product generators 66₀ through 66ₙ in parallel, each receiving multiplicand lines MCN as an input. For the particular example described herein, where 72-bit operands are multiplied using three-bit Booth encoding, thirty-six partial products PP₀ through PP₃₅ are generated (i.e., n = 35). Booth encoder 68, as described above, forwards a set of three control lines N, Z, X to each partial product generator 66 to communicate thereto the control signals for generating a partial product PP, based upon the corresponding three bits of the multiplier. Partial product generators 66₀ through 66ₙ thus, in parallel, produce partial product outputs PP₀ through PPₙ.

Each of partial product generators 66₀ through 66ₙ includes logic associated with each output bit position in its corresponding partial product output PP₀ through PPₙ, for generating an output state according to the multiplicand input bits on lines MCN and to the control lines N, Z, X from Booth encoder 68 for that partial product. Referring to Figure 5b, an example of a logic cell 66_{i,j} in an ith one of partial product generators 66₀ through 66ₙ is illustrated functionally. Cell 66_{i,j} generates the jth bit position of the ith partial product output PPᵢ. In this example, two multiplicand bits MCNⱼ and MCNⱼ₋₁ from shifted multiplicand state 61 (i.e., the shifted multiplicand value combined with the state of line SGN, as noted above) are received by multiplexer 73 in cell 66_{i,j}. Multiplexer 73 is controlled by control line Xᵢ to select either multiplicand line MCNⱼ or line MCNⱼ₋₁ for its output on line MLT_{i,j}, which is connected to multiplexer 74. When control line Xᵢ is active, multiplexer 73 in cell 66_{i,j} selects multiplicand line MCNⱼ₋₁ for application to line MLT_{i,j}, effecting performing a left shift by one bit and thus multiplying the value on lines MCN by a factor of two; otherwise, when control line Xᵢ is inactive, multiplexer 73 selects multiplicand line MCNⱼ, which merely passes lines MCN through to lines MLT. Line MLT_{i,j} is applied, in true and complement states, to inputs of multiplexer 74, which receives ground (i.e., a logic "0") at its third input. Multiplexer 74 in cell 66_{i,j} is controlled by control lines Nᵢ, Zᵢ from Booth encoder 68 to select either a "0" state, or the true or complement value of line MLT_{i,j}, for output as partial product bit PP_{i,j}. For example, in generating a partial product, if control line Zᵢ is active, indicating that this partial product is zero, multiplexer 74 selects the ground level for application to its output. In the case where control line Zᵢ is inactive (i.e., the partial product is non-zero), control line Nᵢ controls multiplexers 74 to select the logical complement of the associated lines MLT (N active) or the true value (line N inactive). Partial product bit PP_{i,j} is thus generated from shifted multiplicand lines MCNⱼ, MCNⱼ₋₁, according to control lines Xᵢ, Nᵢ, Zᵢ from Booth encoder 68.

Of course, partial product generators 66 may alternatively be constructed according to other techniques for generating the appropriate partial products. For example, instead of multiplexers 73, 74, each cell 66_{i,j} may be implemented as a direct logic realization, if desired. It is contemplated that such techniques for constructing partial product generators 66 will be apparent to those of ordinary skill in the art. Each bit of a given partial product PPᵢ is driven by a similar cell 66_{i,j} that receives the same state of control lines Xᵢ, Nᵢ, Zᵢ, but for different shifted multiplicand lines MCN. For example, with reference to cell 66_{i,j} of Figure 5b, an adjacent cell 66_{i,j-1} (not shown) receives multiplicand line MCNⱼ₋₁ and line MCNⱼ₋₂; conversely, an adjacent cell 66_{i,j+1} (not shown) will receive line MCNⱼ and line MCNⱼ₊₁. The combination of all multiplexers 73 in partial product generator 66ᵢ thus multiplies the multiplicand on lines MCN by a factor of two responsive to control line Xᵢ being asserted, and selects zero, or the true or complement of lines MLTᵢ as the partial product responsive to the state of control lines Nᵢ, Zᵢ. Accordingly, each partial product PPᵢ according to this exemplary embodiment may correspond to ±0×, ±1×, or ±2× the multiplicand.

Referring back to Figure 5a, partial product outputs PP₀ through PPₙ are combined with corresponding prefix bits PFX₀ through PFXₙ generated by prefix logic 70, and presented to multiplier array 72 as combined partial product states 67₀ through 67ₙ, as will now be described. As shown in Figure 4, line SGN at the output of multiplexer 64 is connected to prefix logic 70, as are control lines N, Z for each partial product as generated by Booth encoder 68. For clarity of description, Figure 4 illustrates the generation and use of a sign extension prefix for only a single partial product PP; it is of course to be understood that each of the partial products similarly receive a prefix generated by prefix logic 70.

Prefix logic 70 is combinational logic that combines the logic states of lines SGN, N, and Z to generate a prefix on lines PFX that is applied to a corresponding partial product PP generated by partial product generators 66. According to the preferred embodiment of the invention, the lowest order partial product (partial product PP₀ in Figure 5a), which is generated from the least significant bit of the multiplier, will receive a three-bit prefix, while the other partial products (partial products PP₁ through PPₙ of Figure 5a) will receive a two-bit sign extension prefix. The three-bit and two-bit prefixes generated according to this embodiment of the invention are the minimum size sign extension prefixes that provide accurate results; it is to be understood, of course, that longer prefixes may be generated and applied to the partial products, if desired and if contemplated by the circuitry used for addition of the prefixed partial products. The sign extension prefix generated by prefix logic 70 depends upon whether signed integer multiplication is being performed and, if so, the sign of the multiplicand, and also depends upon whether the Booth encoding for that partial product is zero or negative. This information is provided to prefix logic 70 by line SGN from multiplexer 64 and the N, Z control lines from Booth encoder 68.
For the lowest order partial product PP₀, prefix logic 70 generates a three bit prefix responsive to the SGN, N₀, and Z₀ signals as follows:

| SGN | N₀ | Z₀ | PFX |
|---|---|---|---|
| 0 | 0 | 0 | 100 |
| 0 | 0 | 1 | 100 |
| 0 | 1 | 0 | 011 |
| 0 | 1 | 1 | 011 |
| 1 | 0 | 0 | 011 |
| 1 | 0 | 1 | 100 |
| 1 | 1 | 0 | 100 |
| 1 | 1 | 1 | 011 |

For all other partial products PP₁ through PPₙ (i.e., for partial products PPᵢ, i > 0), prefix logic 70 generates a two-bit prefix responsive to the SGN, Nᵢ, and Zᵢ signals as follows:

| SGN | Nᵢ | Zᵢ | PFX |
|---|---|---|---|
| 0 | 0 | 0 | 11 |
| 0 | 0 | 1 | 11 |
| 0 | 1 | 0 | 10 |
| 0 | 1 | 1 | 10 |
| 1 | 0 | 0 | 10 |
| 1 | 0 | 1 | 11 |
| 1 | 1 | 0 | 11 |
| 1 | 1 | 1 | 10 |

It is contemplated that one of ordinary skill in the art will be readily able to construct prefix logic 70 using conventional Boolean minimization techniques, given the above functional description.

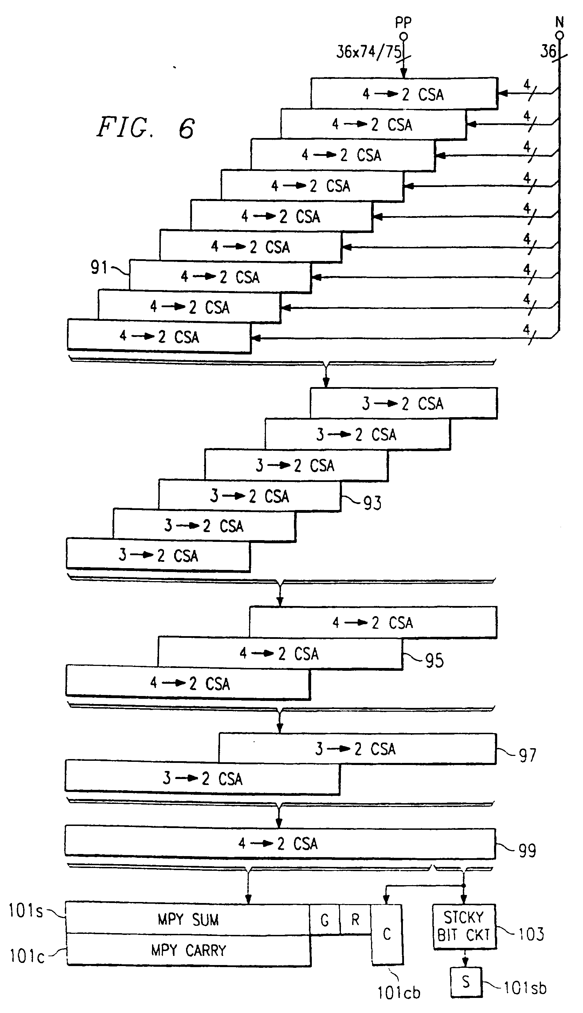

The combinations of the partial products PP₀ through PPₙ and their corresponding prefixes PFX₀ through PFXₙ, such combinations illustrated in Figures 4 and 5a by combined partial product states 67₀ through 67ₙ, are forwarded to multiplier array 72 for summing into the ultimate product. Referring now to Figure 6, the construction and operation of multiplier array 72 will be described in detail.

Multiplier array 72, as noted above, includes multiple levels of carry-save adders, by way of which the partial products of the multiplicand as indicated by the Booth encoded multiplier are added into the product. According to this embodiment of the invention, five carry-save levels 91, 93, 95, 97, 99 of carry-save adders are used to add the thirty-six partial products of the multiplicand, as selected by Booth encoder 68, into the sum (lines MPYSUM of Figure 3) and carry (lines MYPCARRY) constituting the product of the mantissas on lines MANTA, MANTB. It is to be understood that the arrangement of carry-save levels 91, 93, 95, 97, 99 of multiplier array 72 is illustrated functionally in Figure 6; the actual physical layout of levels 91, 93, 95, 97, 99 on an integrated circuit will preferably interleave the carry-save adders among the various levels, to more efficiently route signals and results thereamong. Such layout techniques are conventional in the art. First carry-save level 91 consists of nine 4-to-2 carry-save adders (CSAs). Each of the nine CSAs in level 91 receive four partial products at their inputs, and add these partial products to form two intermediate results (sum and carry bits for each bit position). As indicated in Figure 6, the CSAs in level 91 are each at least seventy-five bits wide, to accommodate up to three sign extension bits. Accordingly, the CSAs in first carry-save level 91 each receive combined partial product states 67 in the form of a set of four partial products PP, each with a corresponding sign extension prefix PFX. In addition, each of the CSAs in first carry-save level 91 receive, at carry-in inputs, a set of four control lines N from Booth encoder 68, one associated with each input partial product PP. As discussed hereinabove, control line Nᵢ indicates, when asserted, that its associated partial product PPᵢ is to be negated, in the two's complement sense; the forwarding of control line Nᵢ with its associated partial product PPᵢ to the carry-in of the appropriate CSA in first carry-save level 91 effects the addition of "1" in the least-significant bit, as necessary in generating two's complement representations.

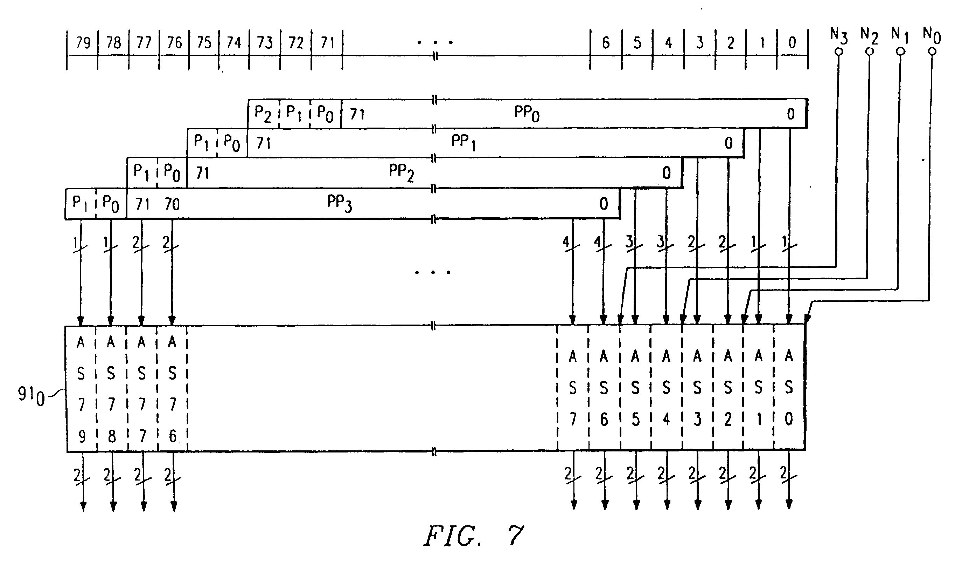

Figure 7 functionally illustrates CSA 91₀ in first carry-save level 91 according to the preferred embodiment of the invention; the other CSAs in first carry-save level 91 will, of course, be similarly constructed. CSA 91₀ includes, in this example, eighty adders AS0 through AS79, each of which receive up to four input bits from partial products PP₀ through PP₃, plus carry-in bits as appropriate, and which generate two output bits corresponding to the sum and carry outputs from each stage, as conventional for 4:2 carry-save adders. Adders AS0 through AS79 are constructed according to conventional techniques known in the art.

Lowest order partial product PP₀ is a seventy-two bit value, as noted above, with a three-bit prefix PFX₀ generated by prefix logic 70. Prefix PFX₀ is illustrated in Figure 7 as bits P₀ through P₂ in bit positions 72 through 74 of partial product PP₀. Partial products PP₁ through PP₃ of Figure 7 (and through PP₃₅ generated by partial product generators 66) each have two-bit prefixes PFX generated by prefix logic 70, illustrated as bits P₀, P₁ in Figure 7. Partial products PP are associated with groups of multiplier bits according to the Booth encoding performed by Booth encoder 68 described above, and as such are aligned in a staggered manner relative to one another when applied to first carry-save level 91 of multiplier array 72. The alignment of partial products PP₀ through PP₃ relative to adders AS0 through AS79 in CSA 91₀ is illustrated in Figure 7. Adder AS0 receives only the least significant bit (bit 0) from partial product PP₀ as addend inputs, and the corresponding control line N₀ from Booth encoder 68 for the lowest order partial product PP₀ as a carry-in, and generates two output bits therefrom; similarly, adder AS1 receives only the next least significant bit (bit 1) from partial product PP₀ as an addend input, and generates two output bits therefrom. Adder AS2 receives an addend input from partial product PP₀ (bit 2) and an addend input from the least significant bit from partial product PP₁, along with a carry-in from control line N₁ associated with partial product PP₁. The inputs presented to adders AS2 and higher are similarly arranged, with adder AS6 receiving addend inputs from all four of partial products PP₀ (bit 6), PP₁ (bit 4), PP₂ (bit 2) and PP₃ (bit 0), plus a carry-in from control line N₃ associated with partial product PP₃. On the higher-order end, for example, adder AS76 receives addend inputs only from partial product PP₂ (prefix bit P₀) and partial product PP₃ (its bit 70), and adder AS77 receives, as addend inputs, prefix bit P₁ from partial product PP₂ and bit 71 from partial product PP₃. Adders AS78, AS79 only receive associated prefix bits P₀, P₁, respectively, from partial product PP₃.

Accordingly, CSA 91₀ generates eighty pairs of output bits corresponding to the sum of the aligned partial products PP₀ through PP₃, including prefixes PFX₀ through PFX₃, and including the necessary carry-in bits on control lines N₀ through N₃ as indicated by Booth encoder 68. The remaining eight adders in first carry-save level 91 are, of course, similarly constructed so as to similarly add the remaining thirty-two partial products. First carry-save level 91 thus generates eighteen results from the addition of the thirty-six partial products PP₀ through PP₃₅ (with prefixes PFX), each CSA therein generating two results (sum and carry bits).

Referring back to Figure 6, the eighteen results from first carry-save level 91 are forwarded to second carry-save level 93, in the form of up to eighty-two bit binary words. Second carry-save level 93 consists of six 3-to-2 CSAs, for receiving the eighteen results and generating twelve results therefrom, of bit width up to eighty-eight bits, which are in turn applied to third carry-save level 95. Third carry-save level 95 has three 3-to-2 CSAs, which generate six results in the form of up to 100-bit words for application to fourth carry-save level 97; some of the least significant bit results from third carry-save level are not be forwarded to fourth carry-save level 99, but are instead forwarded to sticky bit circuitry 103 which generates the sticky bit used for rounding. Fourth carry-save level 97 includes two 3-to-2 CSAs that generate four result words of up to 124 bits in width, with some of the least significant bits also forwarded to sticky bit circuitry 103. The four results from fourth carry-save level 99 are applied to fifth carry-save level 99, which is a 4-to-2 CSA that produces the sum and carry result words of up to 145 bits in width. The seventy-two MSBs of the sum and carry results from fifth carry-save level 99 are stored in sum and carry registers 101s, 101c, respectively, after a left-shift by two bit positions to recover the factor of four lost by the initial right shift of the multiplicand. Carry bits generated by the left shift are stored in carry bit register 101cb. A sticky bit is generated by sticky bit logic circuit 103 from the LSBs of the results from carry-save levels 95, 97, 99, and is stored in sticky bit registers 101sb. Guard bit G and round bit B, as conventional in the art, are also taken from bits below the seventy-two bits stored in registers 101, and are used in combination with the sticky bit S in register 101sb to properly round the multiplication result according to the desired mode. The final results from multiplier 86 are then forwarded to adder 90 in FPU 2^{nd} execution stage 58 on lines MPYSUM, MPYCARRY, CIN as shown in Figure 3, which generates the product from the sum and carry outputs of multiplier 86. The rounding bits (G, R, S) are forwarded to rounding circuitry 106 in FPU 3^{rd} execution stage 60.

Multiplier 86 according to this embodiment of the invention is thus capable of performing multiplication of operands in various formats, including floating-point, unsigned integer, and signed integer. Sign extension prefixes are generated by multiplier 86 dynamically, based upon the mode of multiplication being performed by multiplier 86. This permits multiplier 86 to efficiently perform any type of multiplication required by a computer program being executed by microprocessor 10, eliminating the need for a separate multiplier circuit used for signed integer multiplication, as conventional in the art.

The operation of microprocessor 10 in performing multiply operations of operands in the various formats will now be described, relative to a simple numerical example in which two four-bit operands are multiplied. It is contemplated that those of ordinary skill in the art, having reference to the description provided herein, will be readily able to understand the operation of microprocessor 10 in effecting multiplication of seventy-two bit operands from these relatively simple examples.

As is known in the art and as described hereinabove, multiplication of floating-point mantissas is performed identically to the multiplication of signed integers, as operations upon the sign bit of floating-point operands are performed separately, preferably in 3^{rd} execution stage 60 as noted hereinbelow. The multiplication of either unsigned integers or of floating-point operands by microprocessor 10 will now be described with reference to the example of the multiplication of 14₁₀ (i.e., 1110₂) by itself. In this example, FPU scheduler 50 will drive line SIGNX to a low logic level (logic "0"), controlling multiplexer 64 to select the ground state (logic "0") for application to line SGN. This "0" state is copied to the most significant bit of the multiplicand, with the multiplicand shifted right by one as noted hereinabove; the value of shifted multiplicand state 61 in this four-bit example is thus 0111. The multiplier is also shifted to divide its contents by two, with a leading "0" inserted so that the multiplier is also represented by 0111.

Generation of partial products from the multiplicand, using three-bit Booth encoding, is next performed. . As is known in the art, 0s are presumed for bits below the LSB in Booth encoding. In this example, two partial products are generated, one using the two LSBs of the multiplier (11 in this example) along with a lower order presumed 0, and one using the three MSBs (011); in this example, according to Booth's algorithm in the three-bit case, the lower order partial product PP₀ is -1× and the higher order partial product PP₁ is +2×. Booth encoder 68 will thus generate control lines of N₀=1, X₀=0, Z₀=0 for the lower order partial product PP₀, and control lines of N₁=0, X₀=1, Z₀=0 for the higher order partial product PP₁, to effect the generation of partial products PP₀ = 1000 and PP₁=1110.

Prefix logic 70, as described hereinabove, receives the state of line SGN along with control lines Zᵢ, Nᵢ from Booth encoder 68 for each partial product PPᵢ, and generates prefixes PFX₀, PFX₁ which are appended to, and stored with, partial products PP₀, PP₁, respectively. For this example, following the truth table noted hereinabove, lower order partial product PP₀ receives the three-bit prefix PFX₀ = 011, and higher order partial product PP₁ receives the two-bit prefix PFX₁ = 11. These prefixes PFX are combined with their associated partial products PP, and are applied to multiplier array 72 to be summed into a product.

Multiplier array 72 in this example only has the two partial products PP₀, PP₁ to add with one another; of course, in the full 72-bit implementation as described hereinabove, multiplier array 72 would have thirty-six partial products to sum into the product result. In this example, therefore, the addition performed by multiplier array 72 would be performed as follows:

| | |
|---|---|
| Carry in (N₁=0; N₀=1) | 0 1 |
| PFX₀ \| PP₀ | 0111000 |
| PFX₁ \| PP₁ | 111110 |
| Product | 100110001 |

This product is shown above in binary form, as produced by adder 90 in FPU 2^{nd} execution stage 58, rather than in its carry-save (i.e., sum and carry digit) form at the output of multiplier 86, for clarity of explanation of this example. According to this embodiment of the invention, the product is shifted left by two bit positions in order to multiply the product by four, making up for the factors of two by which each of the multiplier and multiplicand were divided before generation of the partial products. Accordingly, the resultant product in this example is 11000100₂ as an unsigned integer or floating-point mantissa, which corresponds to 196₁₀ (and is thus the correct product).

In the signed integer case, a control signal on line SIGNX will be asserted by FPU scheduler 50 and applied to multiplexer 64, which will forward the sign bit (S/MSB) from the multiplicand on lines MANTA to line SGN. By way of example, the four-bit multiplication of -2₁₀ by itself by microprocessor 10 will be described, in which case both the multiplicand and the multiplier are represented as four-bit signed integer operands of 1110₂. In this case, the multiplicand (and multiplier, as before) will be shifted right by one bit position, and will receive a copy of line SGN (which is a "1" in this example, considering that the multiplicand is negative) in the most significant bit; as such, shifted multiplicand state 61 is the binary value 1111₂. The multiplier is similarly shifted right by one bit position, with the previous most significant bit copied into the new most significant bit position, such that the multiplier is also represented as 1111₂.

Partial product generators 66, as before, generate partial products PP₀, PP₁ as multiples of the multiplicands selected according to 3-bit Booth encoding. In this example, the lower order partial product PP₀ (based on multiplier LSBs 11 and a presumed 0) is -1× and the higher order partial product PP₁ (based on multiplier MSBs 111) is -0×. Booth encoder 68 will thus generate control lines of N₀=1, X₀=0, Z₀=0 for the lower order partial product PP₀, and control lines of N₁=1, X₀=0, Z₀=1 for the higher order partial product PP₁, to effect the generation of partial products PP₀ = 0000 and PP₁=1111.

Prefix logic 70, as described hereinabove, receives the state of line SGN (in this case a "1") along with control lines Zᵢ, Nᵢ from Booth encoder 68 for each partial product PPᵢ, and generates prefixes PFX₀, PFX₁ to be associated with partial products PP₀, PP₁, respectively. For this example, following the truth table noted hereinabove, lower order partial product PP₀ receives the three-bit prefix PFX₀ = 100, and higher order partial product PP₁ receives the two-bit prefix PFX₁ = 10. These prefixes PFX are combined with their associated partial products PP, and are applied to multiplier array 72 to be summed into the product.

In this four-bit example, multiplier array 72 adds the two partial products PP₀, PP₁, including their corresponding prefixes PFX₀, PFX₁. This addition performed by multiplier array 72 would be performed as follows:

| | |
|---|---|
| Carry in (N₁=1; N₀=1) | 1 1 |
| PFX₀ \| PP₀ | 1000000 |
| PFX₁ \| PP₁ | 101111 |
| Product | 100000001 |

As above, this product is illustrated in its binary form, rather than in carry-save (i.e., sum and carry digit) form. The product is then shifted left by two bit positions in order to multiply the product by four, accounting for the initial division of the multiplier and multiplicand before generation of the partial products, and the result is truncated to eight bits. Accordingly, the resultant product in this example is 00000100₂ as a signed integer with sign bit of "0", which corresponds to 4₁₀ (and is thus the correct product).

As described hereinabove, therefore, multiplier 86 is capable of multiplying binary operands of different formats, with the sign extension prefix properly generated based upon a logical combination of the sign or MSB of the multiplicand, under the control of a control signal SIGNX that indicates the multiplication mode. The need for additional multiplication circuitry for the various multiplication modes is thus avoided. Referring back to Figure 3, FPU 1st execution stage 56 also includes logic (not shown) for recognizing the exceptions of denormalized operands, and of special operands such as zero, infinity, NaN, and the like, when presented as input operands OPA, OPB. This recognition is performed at the input stage because execution stages 56, 58, 60 in FPU 31 are arranged to only operate on normalized operands, according to this embodiment of the invention. Typically, these input exceptions will be handled by FPU 1st execution stage 56 issuing a floating-point sequencer request to FPU microsequencer 47. The input operands will then be reformatted by operation of execution stages 56, 58, 60 executing a microcode sequence called from FPU microsequencer 47. Subsequent instructions in floating-point queue and schedule stages 51, 53 will be aborted until the input exception is handled.

FPU 2nd execution stage 58 includes exponent adjust circuit 94, including preferably a conventional leading bit estimator circuit to derive an exponent shift count that estimates the position of the leading bit of the result for forwarding to normalization circuit 100 in the mantissa data path of FPU 3rd execution stage 60. The exponent value may also be incremented or decremented in exponent adjust circuit 94, and applied to FPU 3rd execution stage 60. In addition, the exponent values output from exponent adjust circuit is also forwarded to over/underflow detector 98, which generates underflow and overflow flags in floating-point status word FSW in the event of an exception. As indicated above, the mantissas for the add and multiply cases are presented to adder 90 by way of multiplexers controlled by a control signal from the control pipeline (not shown) according to whether an add or multiply instruction is being executed. Adder 90, which is a conventional adder of the carry-propagate (CPA) type, receives the mantissa results from FPU 1st execution stage 56, and also a selected carry-in input. The result of the addition by adder 90 is presented to normalization circuit 100 in FPU 3rd execution stage 60. The guard, round, and sticky bits are also forwarded to rounding circuitry 106 in FPU 3rd execution stage 60.

In FPU 3rd execution stage 60, normalization circuit 100 receives a shift count from FPU 2nd execution stage 58, and shifts the result of adder 90 by the shift count indicated, and also performs a fine shift as required. FPU 3rd execution stage 60 also includes rounding circuitry 106 that increments the normalized mantissa in order to calculate a rounded up value using one of several previously stored roundup entries, selected according to the precision mode for the instruction being executed. An appropriate rounding mask corresponding to a precision mode is also combined with the normalized mantissa (both with and without incrementing), with the appropriate value selected and applied as the mantissa result to result selector 115, under the control of a roundup signal from combinational logic that analyzes the states of the sign bit, LSB, guard bit, round bit, and sticky bit of the mantissa to determine whether and how the normalized mantissa is to be rounded.

The appropriate exponent value from FPU 2nd execution stage 58 is presented to multiplexer 115, as determined by the current operation and the values of the operands themselves. The sign bit is forwarded from the parallel floating-point status pipeline (not shown) directly to the sign bit location in result register 112.

As shown in Figure 3, FPU 3rd execution stage 60 also includes quick ROM 110, which stores certain constants, such as indefinite QNaN, zero, infinity (±), π and common fractions of π, and the largest representable number in each available precision format, that are often used in floating-point operations either as the result of an operation or in the event of an exception. These constants are accessed by address values generated by FPU 1st execution stage 56. Result selector 115 selects from between the calculated mantissa, sign, and exponent values and the output of quick ROM 110 for storing the results in result register 117 depending upon the result of the instruction (i.e., whether or not an exception occurred). The contents of result register 117 are forwarded on writeback bus WB to FPU router 54 as discussed above relative to Figure 2. With completion of the operations of FPU 3rd execution stage 60, one pass in the performance of a floating-point instruction is complete.

According to the preferred embodiment of the present invention, therefore, circuitry is provided in a microprocessor and a system incorporating the same that is capable of multiplying binary operands of different formats, including signed and unsigned. Efficiency in construction of the multiplying circuitry is obtained through the use of sign extension prefixes. The multiplying circuitry of the present invention accounts for the various operand formats in properly generating these sign extension prefixes from the sign bit of the multiplicand, under the control of a control signal indicating the multiplication mode, or operand format. Duplication of multiplication circuitry to handle the various multiplication modes and operand formats is thus avoided.

While the present invention has been described according to preferred embodiments, it is of course contemplated that modifications of, and alternatives to, these embodiments, such modifications and alternatives obtaining the advantages and benefits of this invention, will be apparent to those of ordinary skill in the art having reference to this specification and its drawings.

## Claims

1. A microprocessor implemented into an integrated circuit, comprising:
a memory for storing digital data words representing operands, each operand stored in a selected one of a plurality of formats; and
arithmetic circuitry, for retrieving first and second operands from the memory and for generating a product operand corresponding to the multiplication of the operands;
a scheduler for receiving instruction codes corresponding to the program instructions, and for generating a sign control signal indicative of whether the multiplication comprises a signed or unsigned operands; and
a multiplier circuit for receiving a first operand as a multiplicand and a second operand as a multiplier;
a select circuit for receiving a most significant bit from the first operand at a data input and for receiving the control signal at a control input, for generating a sign bit signal corresponding to the most significant bit responsive to the control signal indicating that the multiplication comprises a signed operand, and corresponding to a fixed logic level responsive to the control signal indicating that the multiplication comprises an unsigned operand;
partial product generating circuitry, coupled for receiving the second operand, and for receiving the first operand with a modified most significant bit corresponding to the sign bit signal, for generating a plurality of partial products each corresponding to a multiple of the modified first operand responsive to the value of a corresponding portion of the second operand;
prefix logic for applying a prefix to each partial product responsive to the sign control signal and to the corresponding portion of the second operand for the partial product; and
adder circuitry, for adding the partial products with prefixes into a product operand.

2. The microprocessor of Claim 1 or Claim 2, wherein the arithmetic circuitry is controllable according to program instructions.

3. The microprocessor of claim 1, wherein the partial product generating circuitry comprises:
a Booth encoder, for receiving the second operand, and for generating a plurality of sets of control signals, each set of control signals having a state corresponding to the value of a corresponding portion of the second operand;
a partial product generator, coupled for receiving the modified first operand, and coupled to the Booth encoder for receiving a plural sets of control signals, for generating a plurality of partial products, each partial product corresponding to a multiple of the value of the modified first operand selected responsive to a corresponding set of control signals.

4. The microprocessor of Claim 3, wherein the prefix logic is coupled to the Booth encoder for receiving the plurality of sets of control signals therefrom;
and wherein the prefix generated by the prefix logic for each partial product is responsive to the sign control signal in combination with the state of control signals in the corresponding set of control signals.

5. The microprocessor of Claim 3 or Claim 4, wherein the sets of control signals generated by the Booth encoder each include a zero control signal indicating, when asserted, that the associated partial product is to be zero, and a negative control signal indicating when asserted that the associated partial product is to be negative.

6. The microprocessor of Claim 5, wherein the prefix generated by the prefix logic for each partial product is responsive to the sign control signal in combination with the state of the zero and negative control signals.

7. The microprocessor of Claim 5 or Claim 6, wherein the adder circuitry comprises:
a first level of adders, each adder in the first level receiving at least two partial products and adding the at least two partial products;
a second level of adders, each adder in the second level receiving results from at least two adders in the first level of adders and adding the received results;
and wherein the negative control signal for each partial product is coupled to a carry-in input of an adder in the first level of adders receiving its corresponding partial product.

8. The microprocessor of any of Claims 5 to 7, wherein the sets of control signals generated by the Booth encoder further include a magnitude control signal indicating whether the value of the second operand is to be multiplied by a non-unity factor in generating the associated partial product.

9. The microprocessor of Claim 8, wherein the prefix generated by the prefix logic for each partial product is responsive to the sign control signal in combination with the state of the zero and negative control signals.

10. The microprocessor of Claim 8 or Claim 9, wherein the corresponding portions of the second operand used by the Booth encoder are each three bits.

11. The microprocessor of any of Claims 2 to 10, wherein the prefix logic applies a prefix of a first length to a lowest order partial product, and applies of a second length, shorter than the first length, to partial products of higher order.

12. The microprocessor of Claim 11, wherein the first length is three bits and the second length is two bits.

13. The microprocessor of any preceding Claim, wherein the adder circuitry comprises a plurality of levels of carry-save adders.

14. The microprocessor of any preceding Claim, further comprising:
at least one integer execution unit, for executing program instructions upon operands of the integer form;
and wherein the arithmetic circuitry corresponds to a floating-point unit in the microprocessor.

15. The microprocessor of Claim 13, wherein a signed format corresponds to a signed integer operand format;
and wherein the plurality of formats includes a plurality of unsigned formats, the unsigned formats comprising a floating-point format and an unsigned integer format.

16. The microprocessor of any preceding Claim, further comprising:
a bus interface unit, coupled on one side to the arithmetic circuitry and to the memory, and coupled on the other side to an external bus; and
external subsystems coupled to the external bus.

17. A method of operating arithmetic circuitry in a microprocessor for performing multiplication operations comprising the steps of:
determining whether the multiplication is of operands in a signed or an unsigned format;
modifying the first operand with a leading sign bit signal, the leading sign bit signal corresponding to a sign bit of a first operand responsive to determining that the multiplication is of operands in the signed format, the leading sign bit signal being at a fixed logic level responsive to determining that the multiplication is of operands in the unsigned format;
generating a plurality of partial products, each partial product being a multiple of the modified first operand selected responsive to the value of a corresponding portion of a second operand;
modifying each of the plurality of partial products with a sign extension prefix, each sign extension prefix generated responsive to, the leading sign bit signal and to the value of the corresponding portion of the second operand; and
adding the modified plurality of partial products.

18. The method of Claim 17, wherein the step of generating a plurality of partial products comprises:
Booth encoding each of a plurality of portions of the second operand to generate a plurality of multiple control signals including a zero signal indicating that the corresponding partial product is to be zero, and a negative signal indicating that the corresponding partial product is to be negative; and
generating a plurality of partial products, each partial product being a multiple of the modified first operand indicated by the plurality of multiple control signals for its corresponding Booth encoded portion of the second operand.

19. The method of Claim 18, further comprising generating each sign extension prefix responsive to the leading sign bit signal and to the state of the zero signal and negative signal.

20. The method of Claim 19, wherein the adding step comprises:
applying a carry-in signal corresponding to the state of the negative signal for each partial product;
adding together the partial products and carry-in signals to derive a product operand.

21. The method of any of Claims 18 to 20, further comprising generating the plurality of multiple control signals generated in the Booth encoding step and a magnitude control signal indicating the magnitude of the multiple of the modified first operand selected in generating the plurality of partial products.

22. The method of Claim 21, further comprising generating each sign extension prefix responsive to the leading sign bit signal and to the state of the zero signal and negative signal.

23. The method of any of Claims 17 to 22, further comprising:
responsive to determining that the multiplication is of operands in the unsigned format, adding exponent portions of first and second operands in the unsigned format to produce an exponent result;
wherein the modifying, generating, modifying, and adding steps are performed upon mantissa portions of the first and second operands.
